# EUROPÄISCHE PATENTSCHRIFT

(11) **EP 2 985 202 B1**
(45) Veröffentlichungstag und Bekanntmachung des Hinweises auf die Patenterteilung: **31.01.2018**
(21) Anmeldenummer: 15170492.1
(22) Anmeldetag: 03.06.2015
(51) Int. Cl.: B62B 3/14

(54) **STAPELBARER TRANSPORTWAGEN**
NESTABLE TRANSPORT VEHICLE
CHARIOT EMPILABLE

(30) Priorität: 13.08.2014 DE 102014111532
(43) Veröffentlichungstag der Anmeldung: 17.02.2016
(73) Patentinhaber: Wanzl Metallwarenfabrik GmbH, 89340 Leipheim (DE)
(72) Erfinder: Gerstmaier, Michael, 89441 Medlingen (DE)

(56) Entgegenhaltungen:
- EP-A2- 2 529 995
- DE-A1- 3 022 990
- DE-U1- 9 206 229
- FR-A- 788 088

## Beschreibung

Die vorliegende Erfindung betrifft einen stapelbaren Transportwagen.

Stapelbare Transportwägen, insbesondere Einkaufswägen, sind aus dem Stand der Technik bekannt. Diese werden zum Beispiel in SB-Märkten von den Kunden zum Transport der gewählten Waren während des Einkaufs benutzt.

Ein derartiger Transportwagen ist beispielsweise aus der EP 0 905 004 B1 bekannt. Dieser Transportwagen weist ein Fahrgestell auf, an dem Rollen angeordnet sind. Ferner trägt das Fahrgestell einen Korb, an dem ein Schiebegriff angeordnet ist. Im hinteren Bereich ist eine zusätzliche Warenablage vorgesehen, die von einer Nichtgebrauchslage in eine Gebrauchslage bewegbar ist und beispielsweise mit Getränkekisten oder Getränkegebinden beladen werden kann.

Aus der EP 2 529 995 A2 ist weiter ein Transportwagen bekannt, der zwischen dem Fahrgestell und den Heckrollen ein Bauteil zur Anbindung der Rollen an das Fahrgestell aufweist.

Dieses Bauteil für die Anbindung ist üblicherweise als Schmiedebauteil ausgeführt. Die Herstellung dieser Schmiedebauteile ist jedoch aufwendig, da zur Erreichung der notwendigen Fertigungstoleranzen zahlreiche Nachbearbeitungsschritte erforderlich sind. Aus der DE 3022990 A1 ist ein stapelbarer Transportwagen gemäß dem Oberbegriff von Anspruch 1 bekannt.

Es ist daher die Aufgabe der vorliegenden Erfindung, einen stapelbaren Einkaufswagen der eingangs genannten Art in vorteilhafter Weise weiter zu bilden, insbesondere dahingehend, dass die Anbindung der Rollen an das Fahrgestell vereinfacht wird und mit geringeren Kosten möglich ist.

Diese Aufgabe wird erfindungsgemäß gelöst durch einen stapelbaren Transportwagen mit den Merkmalen des Anspruchs 1.

Die Erfindung basiert auf dem Grundgedanken, dass die Anbindung der Rolle ohne ein geschmiedetes Bauteil auskommen kann. Vielmehr soll für die Anbindung einer Rolle, insbesondere der im Heck des Transportwagens befindlichen Bockrollen, ein Formteil eingesetzt werden. Ein derartiges Formteil kann einfach und mit hoher Genauigkeit, z.B. durch Stanzbiegen bzw. Stanzprägen, z.B. aus einem Blech (beispielsweise (verzinktes) Stahlblech bzw. Edelstahlblech) hergestellt werden. Dadurch sollen zum Einen eine kostenintensive Fertigung des geschmiedeten Bauteils und zum Anderen die notwendige Nachbearbeitung zur Erzielung der benötigten Fertigungsgenauigkeit entbehrlich werden. Die Herstellung eines Stanzbiegeteils oder Stanzprägeteils kann einfacher und mit geringeren Fertigungskosten erfolgen als die Herstellung eines Schmiedebauteils, wie es derzeit üblicherweise verwendet wird. Das Fertigungsverfahren des Stanzbiegens bzw. Stanzprägens ermöglicht die Herstellung von Bauteilen, die ausreichend stabil und gleichzeitig bereits die notwendige Fertigungsgenauigkeit aufweisen.

Der Transportwagen kann insbesondere ein stapelbarer Einkaufswagen mit einem Fahrgestell sein, das mit Rollen versehen ist und einen Korb trägt. Am Korb kann ein Schiebegriff vorgesehen sein und das Fahrgestell kann weiter mit einer Warenablage ausgestattet sein. Die Warenablage kann von einer Nichtgebrauchsstellung bzw. Nichtgebrauchslage in eine Gebrauchsstellung bzw. Gebrauchslage überführt werden.

Die mittels der Anbindung befestigte Rolle ist insbesondere eine Heckrolle, d.h. eine bezogen auf die Fahrtrichtung im Heck des Transportwagens befindliche Rolle. Diese Rolle kann eine sogenannte Bockrolle, also eine feststehende bzw. richtungsstabil montierte Rolle sein. Im Heck des Transportwagens befindet sich üblicherweise auch ein Schiebegriff, mittels dessen der Transportwagen gewöhnlich geschoben wird. Die Rolle, insbesondere die beiden Bockrollen, befinden sich an dem Ende des Transportwagens, an dem auch der Schiebegriff angeordnet ist, insbesondere unterhalb des Schiebegriffs.

Der Begriff stapelbar ist insbesondere dahingehend zu verstehen, dass der Transportwagen in einen anderen Transportwagen zumindest teilweise eingeschoben werden kann bzw. dass ein anderer Transportwagen in den Transportwagen eingeschoben werden kann.

Das Stanzbiegeteil oder das Stanzprägeteil kann beispielsweise am Fahrgestell mittels einer Schweißnaht befestigt sein.

Des Weiteren kann vorgesehen sein, dass das Stanzbiegeteil oder das Stanzprägeteil zumindest teilweise konvex gewölbt ist und/oder zumindest teilweise als U-Profil ausgebildet ist. Diese Formgebung ermöglicht beim Stapeln der Transportwägen, d.h. beim Einschieben der Transportwägen ineinander, dass der Kontakt der beiden Transportwägen beim Einschiebe- und/oder Herausziehvorgang schonend ablaufen kann. Im Vergleich zu den bislang eingesetzten Schmiedebauteilen bzw. Schlagteilen erlaubt die konvexe Wölbung des Stanzbiegeteils oder des Stanzprägeteils, dass der (ungewollte) Kontakt der Transportwägen, nämlich im Bereich der Anbindung des einen Transportwagens, insbesondere im Bereich der Anbindung der Heckrollen, auf der einen Seite und im Bereich des Fahrgestells des anderen Transportwagens auf der anderen Seite, wesentlich materialschonender als bislang verläuft.

Das Stanzbiegeteil oder das Stanzprägeteil weist einen Rücken und wenigstens eine Flanke auf, insbesondere zwei Flanken, vorzugweise zwei im Hinblick auf ihre Kontur im Wesentlichen identisch geformte Flanken. Der Rücken des Stanzbiegeteils oder Stanzprägeteils kann im montierten Zustand in Heckrichtung angeordnet und ausgerichtet sein. Der Rücken dient insbesondere zur Kraftübertragung der im Betrieb auftretenden Zug- und Druckbelastungen.

Die Flanke bzw. die beiden Flanken dient bzw. dienen der (zusätzlichen) Stabilisierung des Stanzbiegeteils oder Stanzprägeteils und verhindern ein Knicken des Stanzbiegeteils oder Stanzprägeteils. Die Flanken können im Wesentlichen identisch ausgeformt sein.

Denkbar ist beispielsweise, dass die Flanken in dem Bereich, der im montierten Zustand dem Fahrgestell zugewandt ist, ausgebaucht sind. Dadurch kann die Flanke größere Kräfte, insbesondere Zug-, Druck- und/oder Schubkräfte aufnehmen. Die Ausbauchung kann durch entsprechendes Ausstanzen eines Bleches erfolgen. Die Flanke kann im Bereich der Ausbauchung ungebogen bzw. unverformt sein.

Der Rücken kann zumindest teilweise konvex gewölbt sein. Dadurch wird eine zusätzliche Verstärkung des Rückens und des gesamten Stanzbiegeteils oder Stanzprägeteils erreicht.

Die wenigstens eine Flanke kann im Wesentlichen ungewölbt bzw. flach ausgebildet sein. Insbesondere kann die Flanke ungebogen bzw. unverformt sein, z.B. aus unverformtem Blech bestehen.

Der Rücken kann wenigstens eine Ausnehmung zum Ansatz an das Fahrgestell aufweisen. Diese Ausnehmung kann die Positionierung an das Fahrgestell bei der Montage erleichtern.

Vorzugsweise kann die Ausnehmung zumindest teilweise an die Kontur des Fahrgestells angepasst sein. Dadurch kann das Stanzbiegeteil oder das Stanzprägeteil sich an das Fahrgestell anlegen, was die Befestigung des Stanzbiegeteils oder des Stanzprägeteils erleichtert.

Des Weiteren kann vorgesehen sein, dass die Anbindung zwischen der Rolle und dem Stanzbiegeteil oder dem Stanzprägeteil eine Anschraubplatte zur Befestigung der Rolle aufweist. Die Anschraubplatte kann beispielsweise eine Gewindebohrung oder mehrere Gewindebohrungen zur Aufnahme einer Befestigungsschraube oder eines Gewindebolzens aufweisen, mit der/dem die Rolle an der Anschraubplatte angeschraubt ist bzw. angeschraubt werden kann. Die Anschraubplatte kann zudem vergleichsweise einfach und genau gefertigt werden. Da die Bohrungen nicht im Stanzbiegeteil oder Stanzprägeteil, sondern in der Anschraubplatte angeordnet werden, bleiben die Fertigungskosten vergleichsweise gering. Denn das Anordnen der Bohrungen im Stanzbiegeteil oder Stanzprägeteil würde den Umformvorgang erheblich erschweren und damit verteuern. Die Verwendung einer gesonderten Anschraubplatte ermöglicht die Wahl vergleichsweise enger Fertigungstoleranzen, was letztlich eine sehr genaue Positionierung und präzise Ausrichtung der Rolle ermöglicht.

Die Anschraubplatte kann ein Stanzteil sein.

Die Anbindung kann weiter eine Zwischenplatte zwischen Anschraubplatte und Rolle aufweisen. Die Zwischenplatte kann der Ausrichtung der Rolle zur Anschraubplatte dienen. Hierdurch kann bei der Ausrichtung der Rolle eine noch höhere Genauigkeit erreicht werden.

Vorzugsweise kann die Zwischenplatte wenigstens ein Ausrichtungsmittel bzw. Zentriermittel zur Ausrichtung von Zwischenplatte und Anschraubplatte aufweisen. Denkbar ist, dass das Ausrichtungsmittel ein oder zwei Zentrierzapfen ist/sind bzw. aufweist, der/die in entsprechende Zentrierbohrungen in der Anschraubplatte bei der Montage eingesetzt werden kann/können.

Des Weiteren weist das Stanzbiegeteil oder das Stanzprägeteil wenigstens eine Schwenkbügelaufnahme auf, insbesondere eine Schwenkbügelausnehmung, wobei die Schwenkbügelaufnahme zur Aufnahme eines Schwenkbügels für eine Warenablage vorgesehen ist. Dadurch ergibt sich der Vorteil, dass die Schwenkbügelaufnahme einfach und kostengünstig realisiert werden kann. Die Schwenkbügelaufnahme kann beispielsweise direkt bei der Fertigung des Stanzbiegeteils oder des Stanzprägeteils ausgestanzt werden.

Der Schwenkbügel der Warenablage (Kistenablage) kann dann in der als Ausnehmung ausgebildeten Schwenkbügelaufnahme im Stanzbiegeteil bzw. Stanzprägeteil montiert werden, vorzugsweise werkzeuglos durch bloßes Einsetzen.

Die Schwenkbügelaufnahme kann derart beschaffen sein, dass ein Teil des Schwenkbügels in einer Montagestellung in die Schwenkbügelaufnahme entnehmbar einsetzbar ist und in wenigstens einer Betriebsstellung in der Schwenkbügelaufnahme arretiert bewegbar geführt ist. Das Teil des Schwenkbügels, das in einer Montagestellung in die Schwenkbügelaufnahme einsetzbar ist, kann ein Ende des Schwenkbügels sein. Die Betriebsstellung bzw. die Betriebsstellungen der Schwenkbügelaufnahme werden insbesondere in der Nichtgebrauchslage bzw. Nichtgebrauchsstellung und Gebrauchslage bzw. Gebrauchsstellung der Warenablage, zu der der Schwenkbügel gehört, eingenommen.

Die Schwenkbügelausnehmung kann schlüssellochartig ausgebildet sein.

Der Schwenkbügel kann eine Sicke aufweisen.

Denkbar ist insbesondere, dass die Kontur der Schwenkbügelausnehmung an den Querschnitt des Schwenkbügels im Bereich der Sicke angepasst ist. Dadurch kann der Schwenkbügel nur in der Montagestellung eingesetzt werden und ist vorteilhafterweise in der Betriebsstellung in der Schwenkbügelaufnahme arretiert bewegbar geführt, insbesondere derart, dass die Warenablage von der Nichtgebrauchsstellung bzw. Nichtgebrauchslage in eine Gebrauchsstellung bzw. Gebrauchslage überführt werden kann. Sowohl die Nichtgebrauchsstellung bzw. Nichtgebrauchslage als auch die Gebrauchsstellung bzw. Gebrauchslage zählen dabei zur Betriebsstellung, d.h. dass hier der Schwenkbügel stets arretiert bewegbar geführt ist.

Darüber hinaus kann vorgesehen sein, dass ein elastisches Element, insbesondere ein Kunststoffelement vorgesehen ist, das derart mit der Schwenkbügelaufnahme und dem Schwenkbügel zusammenwirkt, dass die Schwenkbügelaufnahme zumindest teilweise verdeckt ist und/oder dass der Schwenkbügel in der Schwenkbügelaufnahme gedämpft gelagert ist, vorzugsweise wobei das elastische Element auf den Schwenkbügel aufgesetzt oder aufgeschoben ist.

Der Schwenkbügel kann hierzu mit einem Kunststoffteil als elastisches Element versehen sein.

Der Schwenkbügel kann eine Vorspannung aufweisen, die derart beschaffen ist, dass der Schwenkbügel zum Einsatz in die Schwenkbügelaufnahme (leicht) elastisch aufgebogen wird und sich dann aufgrund der Vorspannung in die Schwenkbügelaufnahme hineinzieht.

Das elastische Element ist vorzugsweise im montierten Zustand zwischen Schwenkbügel und Stanzbiegeteil bzw. Stanzprägeteil angeordnet und dient der elastischen Lagerung des Schwenkbügels. Insbesondere verhindert das elastische Element im montierten Zustand ein Klappern des Schwenkbügels in der Schwenkbügelaufnahme.

Weitere Einzelheiten und Vorteile der Erfindung sollen nun anhand eines in der Zeichnung näher dargestellten Ausführungsbeispiels erläutert werden. In den Zeichnungen zeigen:
- Fig.1:: eine perspektivische Ansicht auf ein Fahrgestell eines Ausführungsbeispiels eines stapelbaren Transportwagens gemäß der vorliegenden Erfindung;
- Fig. 2:: eine perspektivische Detailansicht auf Bestandteile der Anbindung der Heckrolle des erfindungsgemäßen Transportwagens gemäß Figur 1;
- Fig. 3:: eine weitere perspektivische Detailansicht auf Bestandteile der Anbindung der Heckrolle des erfindungsgemäßen Transportwagens gemäß Figur 1;
- Fig. 4:: eine weitere perspektivische Detailansicht auf einen Bestandteil der Anbindung der Heckrolle des erfindungsgemäßen Transportwagens gemäß Figur 1;
- Fig. 5:: eine perspektivische Ansicht auf eine Heckrolle des erfindungsgemäßen Transportwagens gemäß Figur 1;
- Fig. 6:: eine perspektivische Ansicht auf einen Schwenkbügel der Warenablage des erfindungsgemäßen Transportwagens gemäß Figur 1;
- Fig. 7:: eine perspektivische Detailansicht auf den Schwenkbügel des erfindungsgemäßen Transportwagens gemäß Figur 6;
- Fig. 8:: eine perspektivische Detailansicht auf ein elastisches Element zur Befestigung des Schwenkbügels des erfindungsgemäßen Transportwagens gemäß Figur 6;
- Fig. 9:: eine perspektivische Detailansicht auf die Montagesituation des Schwenkbügels;
- Fig. 10:: eine weitere perspektivische Detailansicht auf die Montagesituation des Schwenkbügels; und
- Fig. 11:: eine weitere perspektivische Detailansicht auf die Montagesituation des Schwenkbügels.

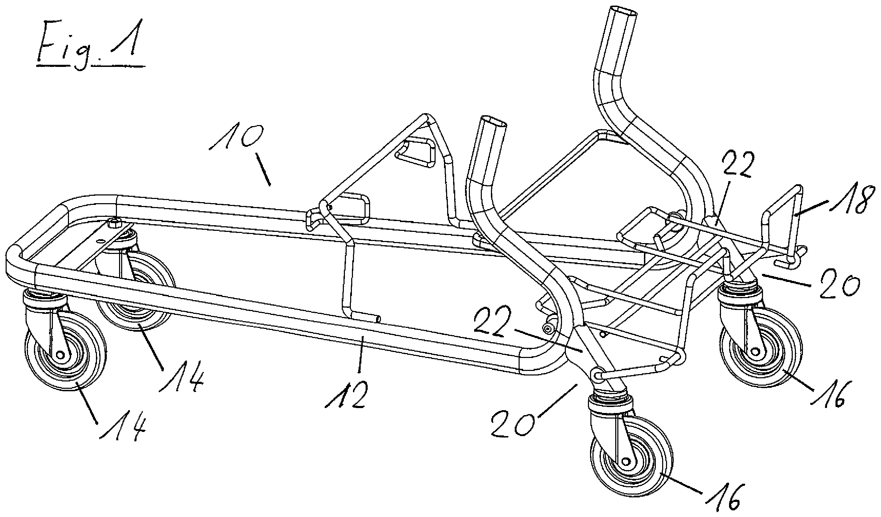

Figur 1 zeigt in perspektivischer Ansicht einen stapelbaren Transportwagen 10, hier ein Einkaufswagen, gemäß der vorliegenden Erfindung.

Von dem stapelbaren Transportwagen 10 sind im Wesentlichen das Fahrgestell 12, die beiden drehbaren bzw. schwenkbaren Frontrollen 14, die als Bockrollen ausgeführten Heckrollen 16 und die im Heck befindliche Warenablage 18 gezeigt. Nicht gezeigt ist unter Anderem der ebenfalls am Fahrgestell 12 befestigte Transportkorb zur Aufnahme von Waren.

Das Fahrgestell 12 besteht unter Anderem aus einem gebogenen Hohlrohr mit ovalem Querschnitt. Das Hohlrohr kann ein Edelstahlrohr oder ein Stahlrohr, insbesondere ein verzinktes Stahlrohr, sein.

Die Heckrollen 16 weisen jeweils eine gesonderte Anbindung 20 auf.

Die Anbindung 20 weist dabei ein Stanzprägeteil 22 auf. Alternativ kann statt eines Stanzprägeteils 22 auch ein Stanzbiegeteil vorgesehen sein.

Das Stanzprägeteil 22 kann z.B. aus einem ca. 2 mm starken Blech, z.B. Stahlblech oder Edelstahlblech, ausgebildet sein. Auch andere Blechstärken z.B. im Bereich zwischen ca. 1 mm bis 5 mm sind denkbar.

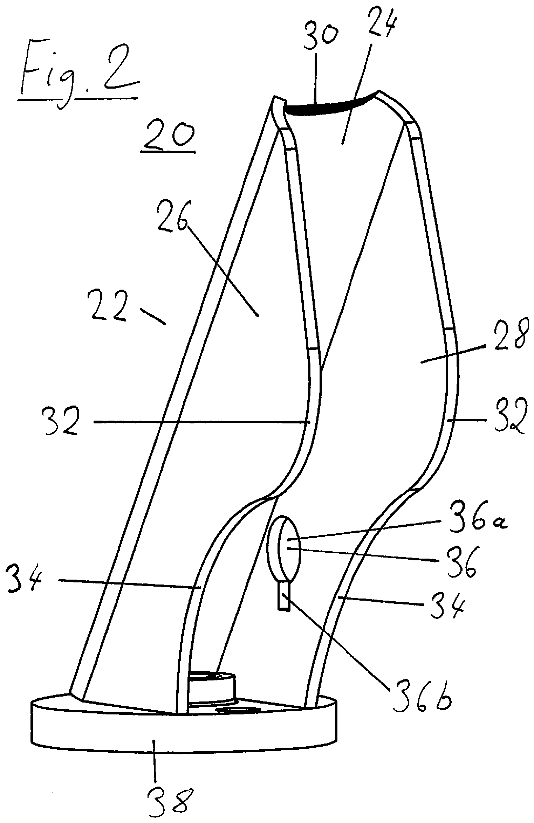

Figur 2 zeigt eine perspektivische Detailansicht auf Bestandteile der vom Heck des Transportwagens 10 aus betrachtet linken Anbindung 20 der Heckrolle 16 des erfindungsgemäßen Transportwagens 10 gemäß Figur 1.

Das Stanzprägeteil 22 weist einen Rücken 24 und zwei Flanken 26 und 28 auf.

Das Stanzprägeteil 22 ist im Bereich des Rückens 24 teilweise konvex gewölbt und insgesamt als U-Profil ausgebildet.

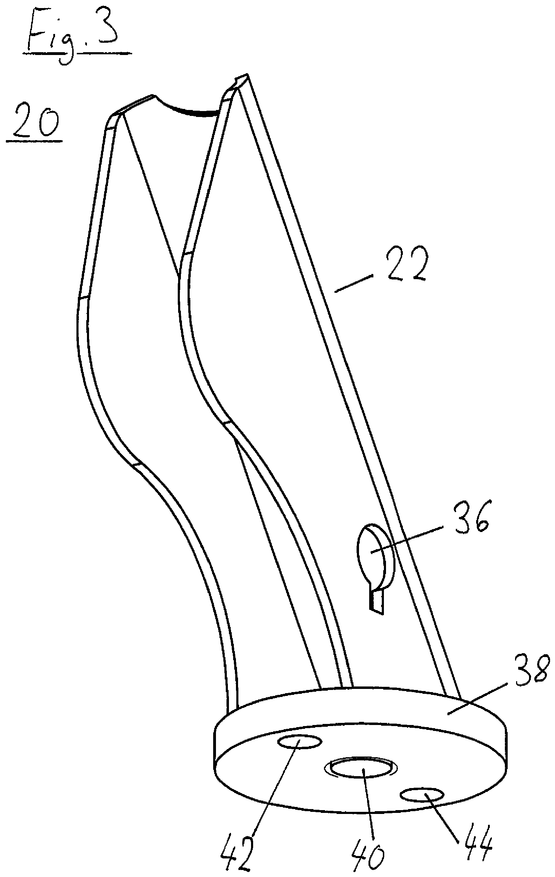

Der Rücken 24 weist eine Ausnehmung 30 zum Ansatz an das Fahrgestell 12 auf, wobei die Ausnehmung 30 zumindest teilweise an die Kontur des Fahrgestells 12 angepasst ist (vgl. auch Figuren 1 und 3).

Die Ausnehmung 30 ist dabei an die Krümmung des Hohlrohrs mit ovalem Querschnitt des Fahrgestells 12 angepasst.

Der Rücken 24 des Stanzprägeteils 22 ist im montierten Zustand in Heckrichtung angeordnet und ausgerichtet.

Die Flanken 26, 28 sind im Hinblick auf ihre Kontur im Wesentlichen identisch geformt und parallel zueinander ausgerichtet.

Beide Flanken 26, 28 sind ungebogen bzw. unverformt und sind durch unverformte Bereiche des Bleches, aus dem das Stanzprägeteil 22 besteht, ausgebildet.

Bezogen auf den montierten Zustand weisen die Flanken 26, 28 jeweils einen konvexen Abschnitt 32 bzw. eine Ausbauchung auf, deren Kanten teilweise zur Anlage an das Fahrgestell 12 vorgesehen sind. Angrenzend an die Ausbauchung weisen die Flanken 26, 28 im montierten Zustand in dem der Rolle zugewandten Bereich einen konkaven, zurückgesetzten Abschnitt 34 auf.

Dadurch hat die Flanke im konvexen Abschnitt 32 im Wesentlichen eine größere Höhe als im konkaven Abschnitt 34.

Im Bereich des konkaven Abschnitts 34 weist eine der beiden Flanken, nämlich die im montierten Zustand des Transportwagens 10 nach außen gerichtete Flanke 28, eine schlüssellochartig ausgebildete Schwenkbügelaufnahme 36 auf.

Die Schwenkbügelaufnahme 36 ist durch eine Ausnehmung in der Flanke 28 ausgebildet, die im Wesentlichen aus einem kreisrunden Bereich 36a und einem daran anschließenden, schmalen, rechteckigen Bereich 36b besteht.

Der rechteckige Bereich 36b weist eine geringere Ausdehnung in der Breite auf als der kreisrunde Bereich 36a.

Die vom Heck des Transportwagens 10 aus betrachtet rechte Anbindung 20 ist im Wesentlichen identisch aufgebaut, weist allerdings den Unterschied auf, dass das Stanzprägeteil 22 der rechten Anbindung 20 spiegelverkehrt aufgebaut ist, weil die Schwenkbügelaufnahme 36 in der dort im montierten Zustand des Transportwagens 10 nach außen gerichtete Flanke angeordnet ist.

Des Weiteren ist, wie in Figur 2 und Figur 3 gezeigt, bezogen auf den montierten Zustand in dem den Rollen zugewandten Teil des Stanzprägeteils 22 eine Anschraubplatte 38 zur Befestigung der Rolle 16 vorgesehen. Die Anschraubplatte 38 befindet sich zwischen der Rolle und dem Stanzprägeteil 22.

Die Anschraubplatte 38 ist hier als kreisrunde Scheibe ausgeführt und weist in ihrem Zentrum eine Gewindebohrung 40 für das Einschrauben eines Gewindebolzens des Halters der Bockrolle 16 auf (vgl. Figur 3).

Neben der Gewindebohrung 40 sind zwei Zentrierbohrungen 42, 44 vorgesehen. Die beiden Zentrierbohrungen 42, 44 können derart ausgerichtet sein, dass sie im montierten Zustand des Transportwagens 10 parallel zur Längsachse des Transportwagens 10 ausgerichtet sind.

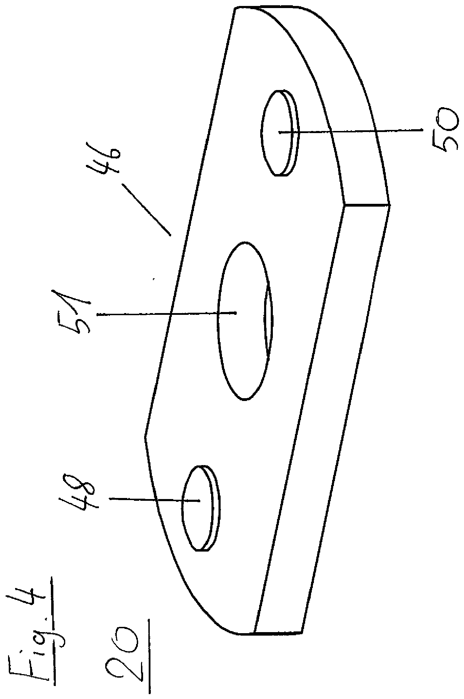

Figur 4 zeigt in perspektivischer Ansicht eine Zwischenplatte 46, die Bestandteil der Anbindung 20 ist.

Die Zwischenplatte 46 ist im montierten Zustand des Transportwagens 10 zwischen Anschraubplatte 38 und Rolle 16 angeordnet.

Die Zwischenplatte 46 weist sich aus der Oberseite erhebende Zentriernoppen 48, 50 als Zentriermittel auf, die zum Eingriff in die Zentrierbohrungen 42, 44 der Anschraubplatte 38 vorgesehen sind. Außerdem ist eine zentrale Durchgangsbohrung 51 vorgesehen.

Die Anschraubplatte 38 und die Zwischenplatte 46 können als Stanzteile ausgebildet sein.

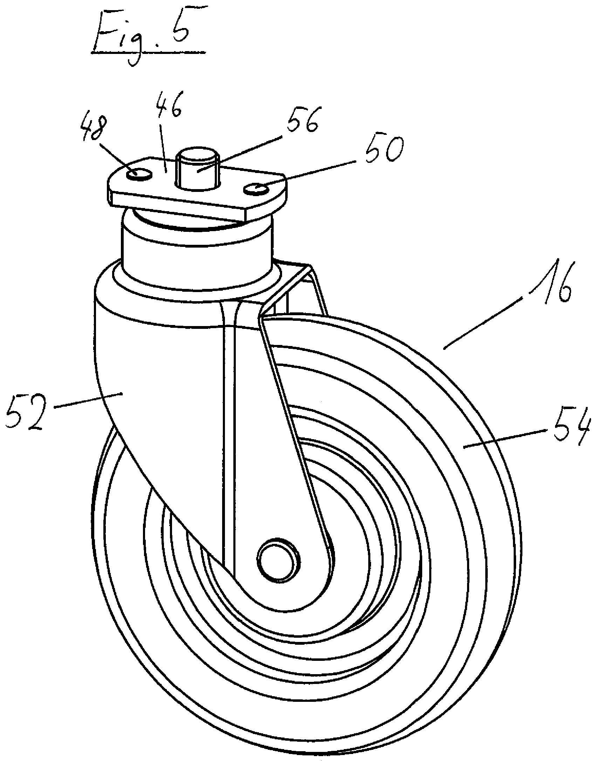

Figur 5 zeigt eine perspektivische Ansicht auf die Heckrolle 16. Die Heckrolle 16 weist einen Heckrollenhalter 52 und einen Reifen 54 auf, der im Heckrollenhalter 52 gehalten und drehbar gelagert bzw. aufgehängt ist.

Der Heckrollenhalter 52 weist einen Gewindebolzen 56 auf, der für die Einschraubung in die Gewindebohrung 40 der Anschraubplatte 38 vorgesehen ist und durch die Durchgangsbohrung 51 der Zwischenplatte 46 hindurchtritt. Zudem ist hier bereits die Zwischenplatte 46 auf dem Heckrollenhalter 52 montiert. Die Zwischenplatte 46 kann am Heckrollenhalter 52 angeschweißt sein.

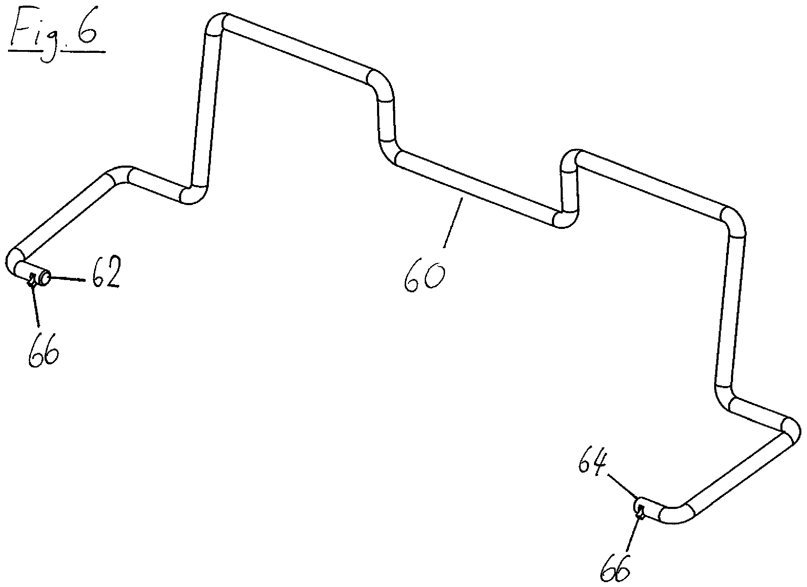

Figur 6 zeigt in perspektivischer Darstellung den Schwenkbügel 60 der Warenablage 18.

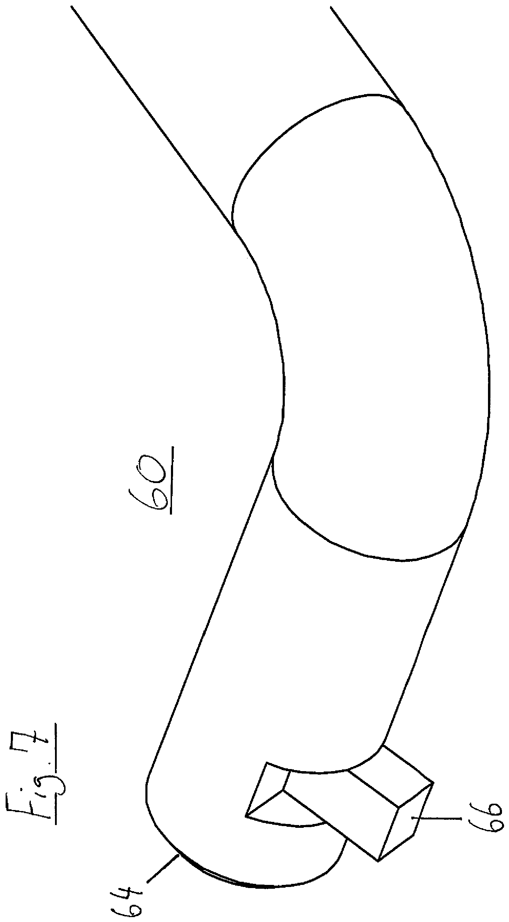

Der Schwenkbügel 60 weist dabei an seinen Enden 62, 64, die zum Einsatz in die Schwenkbügelaufnahme 36 vorgesehen sind, jeweils eine Sicke 66 auf (vgl. hierzu auch Figur 7).

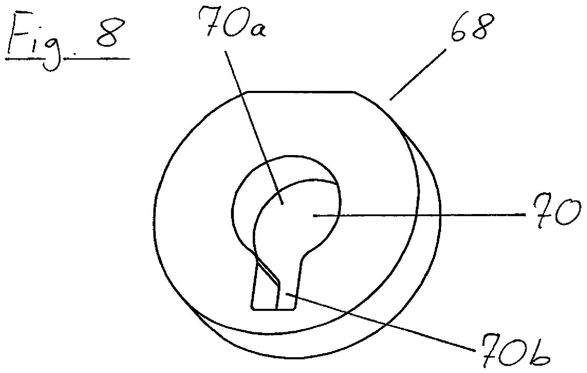

Des Weiteren ist, wie in Figur 8 gezeigt, im Zusammenhang mit der Befestigung des Schwenkbügels 60 ein elastisches Element 68 in Form eines Kunststoffbauteils vorgesehen.

Das elastische Element 68 weist ebenso wie die Schwenkbügelaufnahme 36 eine schlüssellochartige Ausnehmung 70 auf, die im Wesentlichen aus einem kreisrunden Bereich 70a und einem daran anschließenden, schmalen, rechteckigen Bereich 70b besteht.

Der rechteckige Bereich 70b weist eine geringere Ausdehnung in der Breite auf als der kreisrunde Bereich 70a.

Die Kontur der schlüssellochartigen Ausnehmung 70 kann identisch wie die Kontur der Schwenkbügelaufnahme 36 ausgebildet sein.

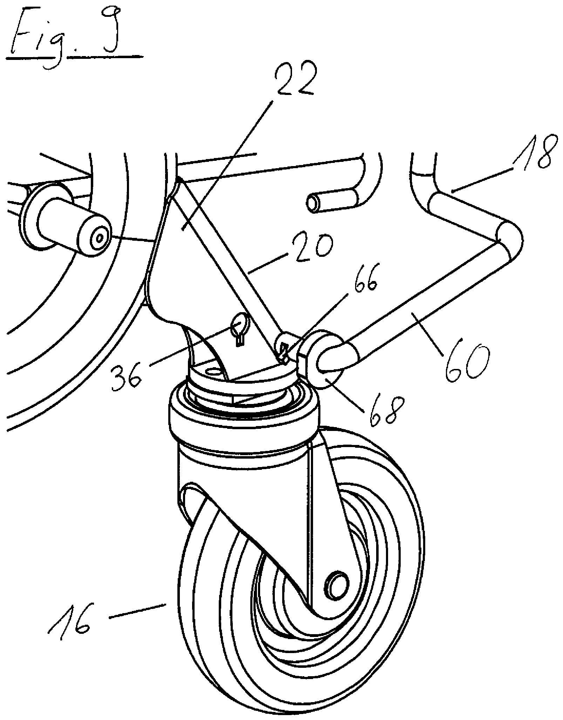

Figur 9 zeigt eine perspektivische Detailansicht auf die Montagesituation des Schwenkbügels 60 beim Einsetzen in die Schwenkbügelaufnahme 36.

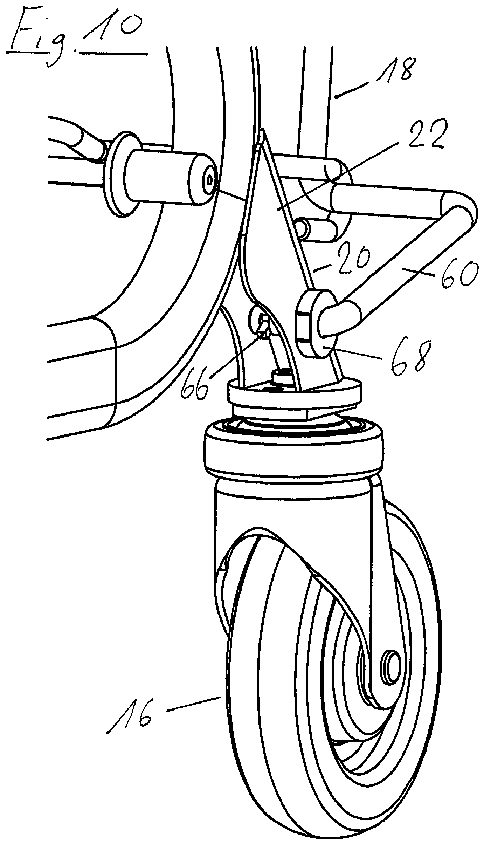

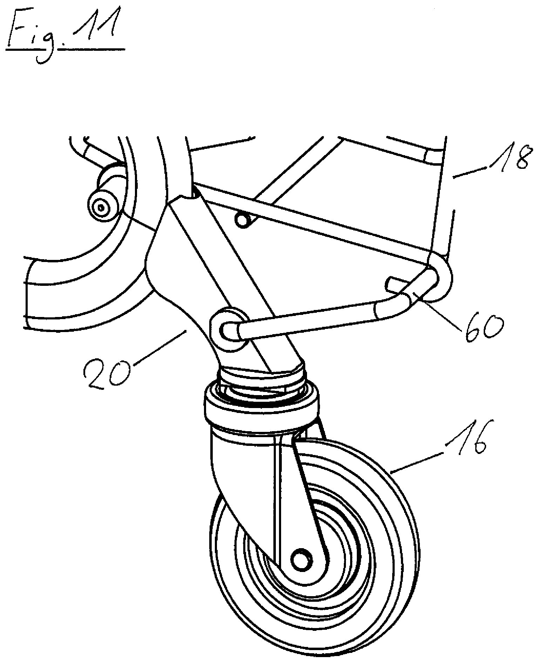

Die Figuren 10 und 11 zeigen weitere perspektivische Detailansichten auf die Montagesituation des Schwenkbügels 60 nach dem Einsetzen in die Schwenkbügelaufnahme.

Die Funktion der Anbindung 20 und ihrer Bestandteile sowie die Funktion und die Montage der Warenablage 18 lassen sich wie folgt beschreiben:
Der Einsatz des Stanzprägeteils 22 (alternativ eines Stanzbiegeteiles) ersetzt die bislang eingesetzten Schmiedeteile in der Anbindung 20 für die Rollen 16 in vorteilhafter Weise. Denn das Fertigungsverfahren des Stanzbiegens bzw. Stanzprägens ermöglicht die kostengünstige Herstellung von Bauteilen, die ausreichend stabil sind und gleichzeitig bereits die notwendige Fertigungsgenauigkeit aufweisen. Das Stanzprägeteil 22 ist leicht und zugleich dennoch ausreichend stabil.

Im Vergleich zu den bislang eingesetzten Schmiedebauteilen bzw. Schlagteilen erlaubt die konvexe Wölbung des Rückens 24 des Stanzprägeteils 22, dass der (ungewollte) Kontakt der Transportwägen, nämlich insbesondere im Bereich der Anbindung 20, insbesondere im Bereich der Anbindung 20 der Heckrollen 16 des aufnehmenden Transportwagens 10, und im Bereich des Fahrgestells 12 des einzuschiebenden Transportwagens 10, wesentlich materialschonender als bislang verläuft. Die Anbindung 20 des aufnehmenden Transportwagens und das Fahrgestell 12 des anderen Transportwagens 10, der in den aufnehmenden Transportwagen 10 eingeschoben wird, können so leichter aneinander vorbei gleiten, so dass die Anbindung 20, aber auch das Fahrgestell 12 insgesamt geringeren Belastungen ausgesetzt sind.

Die Befestigung des Stanzprägeteils 22 am Fahrgestell 12 erfolgt z.B. mittels Schweißen. Die Ausnehmung 30 und die konvexen Abschnitte 32 ermöglichen es, dass das Stanzprägeteil 22 vor dem Anschweißen bereits positionstreu an die entsprechende Stelle am Fahrgestell 12 aufgesetzt werden kann. Dadurch kann die Schweißnaht hochpräzise gesetzt werden.

Da die Bockrollen 16 im Heck des Transportwagens 10 nicht um eine vertikale Drehachse gedreht bzw. geschwenkt werden können (was erwünscht ist), sondern parallel zur Längsachse des Transportwagens 10 feststehend ausgerichtet sind, ist eine präzise Positionierung der Bockrollen 16 notwendig.

Dies geschieht durch das Zusammenspiel von Anschraubplatte 38 und Zwischenplatte 46. Die Zwischenplatte 46 weist auf der Oberseite die Zentriernoppen 48, 50 auf (vgl. Figur 4), wobei die Zentriernoppen 48, 50 zum Einsatz in die Zentrierbohrungen 42, 44 der Anschraubplatte 38 vorgesehen sind. Durch das Einsetzen der Zentriernoppen 48, 50 in die Zentrierbohrungen 42, 44 werden die Anschraubplatte und die Zwischenplatte korrekt zueinander positioniert, was letztlich dazu führt, dass die beiden Heckrollen 16 (Bockrollen 16) korrekt und parallel zueinander und auch parallel zur Längsachse des Transportwagens 10 angeordnet sind.

Die Warenablage 18 kann von einer Nichtgebrauchsstellung bzw. Nichtgebrauchslage in eine Gebrauchsstellung bzw. Gebrauchslage überführt werden. Hierzu kann der in der Schwenkbügelaufnahme 36 gehaltene Schwenkbügel 60 entsprechend verschwenkt werden. Figur 1 zeigt die Warenablage 18 im ausgeschwenkten Zustand, d.h. in der Gebrauchsstellung bzw. Gebrauchslage.

Die Schwenkbügelaufnahme 36 ist derart beschaffen, dass ein Teil des Schwenkbügels 60 in einer Montagestellung in die Schwenkbügelaufnahme 36 entnehmbar einsetzbar ist und in wenigstens einer Betriebsstellung in der Schwenkbügelaufnahme 36 arretiert bewegbar geführt ist.

Auf den Schwenkbügel 60 wird vor dem Einsetzen in die Schwenkbügelaufnahme 36 das elastische Element 68 aufgesetzt.

In der Montagestellung wird der Schwenkbügel 60 derart in die Schwenkbügelaufnahme 36 eingesetzt, dass die Sicke 66 durch den rechteckigen Bereich 36b und die Bügelstange bzw. das Bügelrohr durch den kreisrunden Bereich 36a hindurchgeführt werden (vgl. Figur 9).

Das elastische Element 68 wirkt derart mit der Schwenkbügelaufnahme 36 und dem Schwenkbügel 60 zusammen, dass die Schwenkbügelaufnahme 36 nach dem Einsetzen des Schwenkbügels 60 zumindest teilweise verdeckt ist, siehe Figuren 10 und 11.

Das elastische Element 68 hat die Funktion, dass der Schwenkbügel 60 in der Schwenkbügelaufnahme 36 gedämpft gelagert ist.

Der Schwenkbügel 60 kann eine Vorspannung aufweisen, so dass der Schwenkbügel 60 zum Einsetzen in die Schwenkbügelaufnahmen 36 elastisch aufgebogen werden muss. Die Vorspannung hält den Schwenkbügel 60 dann in den Schwenkbügelaufnahmen 36 (siehe Figur 1).

Damit der Schwenkbügel 60 gedämpft auf die Schwenkbügelaufnahme 36 trifft, ist das elastische Element 68 für die elastische, gedämpfte Lagerung vorgesehen.

## Patentansprüche

1. Stapelbarer Transportwagen (10) mit einem Fahrgestell (12), wobei das Fahrgestell (12) mit Rollen (14, 16) ausgestattet ist, wobei für die Befestigung wenigstens einer Rolle (16) an dem Fahrgestell (12) wenigstens eine Anbindung (20) vorgesehen ist, wobei die Anbindung (20) wenigstens ein Stanzbiegeteil oder Stanzprägeteil (22) umfasst, wobei das Stanzbiegeteil oder das Stanzprägeteil (22) zumindest teilweise konvex gewölbt ist
wobei das Stanzbiegeteil oder das Stanzprägeteil (22) einen Rücken (24) und wenigstens eine Flanke (26, 28) aufweist, **dadurch gekennzeichnet, dass** das Stanzbiegeteil oder das Stanzprägeteil (22) wenigstens eine Schwenkbügelaufnahme (36) aufweist, die zur Aufnahme eines Schwenkbügels (60) für eine Warenablage (18) vorgesehen ist.

2. Stapelbarer Transportwagen (10) nach Anspruch 1, **dadurch gekennzeichnet, dass** das Stanzbiegeteil oder das Stanzprägeteil (22) zumindest teilweise als U-Profil ausgebildet ist.

3. Stapelbarer Transportwagen (10) nach Anspruch 1 oder 2, **dadurch gekennzeichnet, dass** der Rücken (24) zumindest teilweise konvex gewölbt ist.

4. Stapelbarer Transportwagen (10) nach einem der Ansprüche 1 bis 3, **dadurch gekennzeichnet, dass** die wenigstens eine Flanke (26, 28) im Wesentlichen ungewölbt bzw. flach ausgebildet ist.

5. Stapelbarer Transportwagen (10) nacht einem der Ansprüche 1 bis 4, **dadurch gekennzeichnet, dass** das Stanzbiegeteil oder das Stanzprägeteil (22) insbesondere zwei Flanken (26, 28), vorzugsweise zwei im Hinblick auf ihre Kontur im Wesentlichen identisch geformte Flanken (26, 28), aufweist.

6. Stapelbarer Transportwagen (10) nach einem der Ansprüche 1 bis 3, **dadurch gekennzeichnet, dass** der Rücken (24) wenigstens eine Ausnehmung (30) zum Ansatz an das Fahrgestell (12) aufweist, vorzugsweise wobei die Ausnehmung (30) zumindest teilweise an die Kontur des Fahrgestells (12) angepasst ist.

7. Stapelbarer Transportwagen (10) nach einem der vorhergehenden Ansprüche, **dadurch gekennzeichnet, dass** die Anbindung (20) zwischen der Rolle (16) und dem Stanzbiegeteil oder dem Stanzprägeteil (22) eine Anschraubplatte (38) zur Befestigung der Rolle (16) aufweist.

8. Stapelbarer Transportwagen (10) nach Anspruch 7, **dadurch gekennzeichnet, dass** die Anbindung (20) weiter eine Zwischenplatte (46) zwischen Anschraubplatte (38) und Rolle (16) aufweist, vorzugsweise wobei die Zwischenplatte (46) wenigstens ein Ausrichtungsmittel bzw. Zentriermittel (48, 50) zur Ausrichtung von Zwischenplatte (46) und Anschraubplatte (38) aufweist.

9. Stapelbarer Transportwagen (10) nach einem der vorhergehenden Ansprüche, **dadurch gekennzeichnet, dass** die Schwenkbügelaufnahme (36) eine Schwenkbügelausnehmung aufweist.

10. Stapelbarer Transportwagen (10) nach einem der Ansprüche 1 oder 9, **dadurch gekennzeichnet, dass** die Schwenkbügelaufnahme (36) derart beschaffen ist, dass ein Teil des Schwenkbügels (60) in einer Montagestellung in die Schwenkbügelaufnahme (36) entnehmbar einsetzbar ist und in wenigstens einer Betriebsstellung in der Schwenkbügelaufnahme (36) arretiert bewegbar geführt ist.

11. Stapelbarer Transportwagen (10) nach Anspruch 9 oder 10, **dadurch gekennzeichnet, dass** ein elastisches Element (68), insbesondere ein Kunststoffelement vorgesehen ist, das im montierten Zustand derart mit der Schwenkbügelaufnahme (36) und dem Schwenkbügel (60) zusammenwirkt, dass die Schwenkbügelaufnahme (36) zumindest teilweise verdeckt ist und/oder dass der Schwenkbügel (60) in der Schwenkbügelaufnahme (36) gedämpft gelagert ist, vorzugsweise wobei das elastische Element (68) auf den Schwenkbügel (60) aufgesetzt oder aufgeschoben ist.

## Claims

1. A nestable trolley (10) with a wheel frame (12), wherein the wheel frame (12) is equipped with rollers (14, 16), wherein at least one attachment means (20) is provided for fastening at least one roller (16) to the wheel frame (12), wherein the attachment means (20) comprises at least one stamped and bent part or stamped and embossed part (22), wherein
the stamped and bent part or the stamped and embossed part (22) is at least partially convexly curved,
wherein the stamped and bent part or the stamped and embossed part (22) has a back (24) and at least one flank (26, 28),
**characterised in that** the stamped and bent part or the stamped and embossed part (22) has at least one pivoting-bar receptacle (36) which is provided for receiving a pivoting bar (60) for a goods deposition rack (18).

2. A nestable trolley (10) according to Claim 1, **characterised in that** the stamped and bent part or the stamped and embossed part (22) is designed at least partially as a U-profile.

3. A nestable trolley (10) according to Claim 1 or 2, **characterised in that** the back (24) is at least partially convexly curved.

4. A nestable trolley (10) according to one of Claims 1 to 3, **characterised in that** the at least one flank (26, 28) is designed to be substantially non-curved or flat.

5. A nestable trolley (10) according to one of Claims 1 to 4, **characterised in that** the stamped and bent part or the stamped and embossed part (22) has in particular two flanks (26, 28), preferably two flanks (26, 28) which are shaped substantially identically with regard to their contours.

6. A nestable trolley (10) according to one of Claims 1 to 3, **characterised in that** the back (24) has at least one cutout (30) for attachment to the wheel frame (12), preferably the cutout (30) being adapted at least partially to the contour of the wheel frame (12).

7. A nestable trolley (10) according to one of the preceding claims, **characterised in that** the attachment means (20) has between the roller (16) and the stamped and bent part or the stamped and embossed part (22) a screw attachment plate (38) for fastening the roller (16).

8. A nestable trolley (10) according to Claim 7, **characterised in that** the attachment means (20) furthermore has an intermediate plate (46) between the screw attachment plate (38) and roller (16), preferably the intermediate plate (46) having at least one orientation means or centring means (48, 50) for orienting the intermediate plate (46) and screw attachment plate (38).

9. A nestable trolley (10) according to one of the preceding claims, **characterised in that** the pivoting-bar receptacle (36) has a pivoting-bar cutout.

10. A nestable trolley (10) according to one of Claims 1 or 9, **characterised in that** the pivoting-bar receptacle (36) is of such a nature that part of the pivoting bar (60) in an assembly position can be inserted removably into the pivoting-bar receptacle (36) and in at least one operating position is guided movably locked in the pivoting-bar receptacle (36).

11. A nestable trolley (10) according to Claim 9 or 10, **characterised in that** an elastic element (68), in particular a plastics-material element, is provided which in the assembled state cooperates with the pivoting-bar receptacle (36) and the pivoting bar (60) in such a way that the pivoting-bar receptacle (36) is at least partially covered and/or that the pivoting bar (60) is mounted in damped manner in the pivoting-bar receptacle (36), preferably with the elastic element (68) being placed or pushed onto the pivoting bar (60).

## Revendications

1. Chariot de transport imbricable (10) muni d'un châssis de roulement (12), ledit châssis de roulement (12) étant équipé de roulettes (14, 16), au moins un système de rattachement (20) étant prévu pour la fixation d'au moins une roulette (16) audit châssis de roulement (12), ledit système de rattachement (20) incluant au moins une pièce pliée par estampage ou une pièce matricée (22), sachant que
la pièce pliée par estampage ou la pièce matricée (22) présente un bombement au moins partiellement convexe,
ladite pièce pliée par estampage ou ladite pièce matricée (22) comprenant un dos (24) et au moins un flanc (26, 28),
**caractérisé par le fait que**
la pièce pliée par estampage ou la pièce matricée (22) est dotée d'au moins un logement (36) prévu pour recevoir un étrier pivotant (60) dédié à un reposoir (18) à marchandises.

2. Chariot de transport imbricable (10) selon la revendication 1, **caractérisé par le fait que** la pièce pliée par estampage ou la pièce matricée (22) est réalisée, au moins en partie, sous la forme d'un profilé en U.

3. Chariot de transport imbricable (10) selon la revendication 1 ou 2, **caractérisé par le fait que** le dos (24) présente un bombement au moins partiellement convexe.

4. Chariot de transport imbricable (10) selon l'une des revendications 1 à 3, **caractérisé par le fait que** le flanc (26, 28) à présence minimale est, pour l'essentiel, de réalisation respectivement non bombée ou aplatie.

5. Chariot de transport imbricable (10) selon l'une des revendications 1 à 4, **caractérisé par le fait que** la pièce pliée par estampage ou la pièce matricée (22) est notamment pourvue de deux flancs (26, 28), de préférence de deux flancs (26, 28) dont les profils présentent, pour l'essentiel, des configurations identiques.

6. Chariot de transport imbricable (10) selon l'une des revendications 1 à 3, **caractérisé par le fait que** le dos (24) comporte au moins un évidement (30), en vue du montage rapporté sur le châssis de roulement (12), ledit évidement (30) étant, de préférence, au moins partiellement adapté au profil dudit châssis de roulement (12).

7. Chariot de transport imbricable (10) selon l'une des revendications précédentes, **caractérisé par le fait que** le système de rattachement (20) comporte, entre la roulette (16) et la pièce pliée par estampage ou la pièce matricée (22), une platine de vissage (38) dévolue à la fixation de ladite roulette (16).

8. Chariot de transport imbricable (10) selon la revendication 7, **caractérisé par le fait que** système de rattachement (20) comporte, par ailleurs, une platine intermédiaire (46) entre la platine de vissage (38) et la roulette (16), ladite platine intermédiaire (46) étant respectivement munie, de préférence, d'au moins un moyen d'alignement ou d'au moins un moyen de centrage (48, 50) dédié à l'alignement de ladite platine intermédiaire (46) et de ladite platine de vissage (38).

9. Chariot de transport imbricable (10) selon l'une des revendications précédentes, **caractérisé par le fait que** le logement (36) de l'étrier pivotant comporte un évidement affecté audit étrier pivotant.

10. Chariot de transport imbricable (10) selon l'une des revendications 1 ou 9, **caractérisé par le fait que** le logement (36) de l'étrier pivotant est structurellement agencé de façon telle qu'une partie dudit étrier pivotant (60) puisse être insérée de manière amovible dans ledit logement (36), dans une position de montage, et puisse, dans au moins une position de fonctionnement, être guidée dans ledit logement (36) en étant arrêtée avec faculté de mouvement.

11. Chariot de transport imbricable (10) selon la revendication 9 ou 10, **caractérisé par le fait qu'**il est prévu un élément élastique (68), en particulier un élément en matière plastique qui coopère avec le logement (36) de l'étrier pivotant et avec ledit étrier pivotant (60), à l'état monté, de façon telle que ledit logement (36) soit au moins partiellement recouvert, et/ou de façon telle que ledit étrier pivotant (60) soit monté dans ledit logement (36) de manière amortie, ledit élément élastique (68) étant, de préférence, mis en place ou enfilé sur ledit étrier pivotant (60).
